# EUROPEAN PATENT SPECIFICATION

(11) **EP 3 761 207 B1**
(45) Date of publication and mention of the grant of the patent: **30.08.2023**
(21) Application number: 19382573.4
(22) Date of filing: 04.07.2019
(51) Int. Cl.: H04L 9/40, G06F 21/64, H04L 9/00

(54) **METHOD FOR ENTRUSTING BLOCKCHAIN OPERATIONS CONTENTS**
VERFAHREN ZUR BEAUFTRAGUNG VON INHALTEN VON BLOCKKETTENOPERATIONEN
PROCÉDÉ DE FIABILISATION DE CONTENUS D'OPÉRATIONS DE CHAÎNE DE BLOCS

(43) Date of publication of application: 06.01.2021
(73) Proprietor: Lleidanetworks Serveis Telemàtics, S.A., 25003 Lleida (ES)
(72) Inventor: SAPENA SOLER, FRANCISCO, 25003 LLEIDA (ES); GALLO DE LOS MOZOS, MANUEL MARIA, 25003 LLEIDA (ES)

(56) References cited:
- WO-A1-2018/204541
- US-A1- 2018 089 761
- US-A1- 2019 139 037
- Anonymous: "White Paper . ethereum/wiki Wiki . GitHub", , 11 June 2015 (2015-06-11), XP055519858, Retrieved from the Internet: URL:https://web.archive.org/web/2015061118 5326/https://github.com/ethereum/wiki/wiki /White-Paper [retrieved on 2018-10-29]

## Description

### Background

Blockchain, at its core, is valuable because it's a secure method for storing data. Bitcoin functions as a currency because its immutable ledger records data on every transaction, ensuring that no one can claim to own a token they've already spent.

Industries ranging from healthcare to logistics to energy generation are exploring blockchain because it serves as a source of shared, agreed-upon truth via data stored on the blockchain network.

A feature of some blockchains is the capability to create "smart contracts." For example, the Ethereum and Hyperledger blockchain platforms permit the recording of software programs within a block on the blockchain itself. This software automatically performs certain actions on the blockchain when a prescribed condition is met. As an example, a supplier who today ships goods to a customer, sends an invoice, and waits 30, 45, or 90 days for payment would prefer to have the order in a "smart contract" that pays automatically the customer acknowledges receipt of goods on the blockchain. Alternatively, the software can trigger payment based on data from an outside source, sometimes referred to as an "oracle" in the art. For example, "parametric" travel insurance could pay automatically if an airline cancels a flight, with the airline's flight records being the "trusted entity".

However, data can also be a hindrance to blockchain users and developers. Decentralized applications (DApps) built on Ethereum often need to access vast amounts of data, but an October 2017 analysis determined that storing one gigabyte of data on Ethereum would cost about $5 million.

In most blockchain networks, all nodes must re-verify the state of the network after each transaction-which means the more data the network contains, the slower and more resource-intensive each transaction becomes. Increasing the speed at which the Bitcoin network can verify data is one of the main argument proponents for increasing block size limits offer.

On-chain transactions take some time to accumulate enough confirmations to ensure that they can-not be reversed; accepting a transaction without any confirmations is potentially risky. Confirmations take time and the time they take to accumulate is random. Off-chain transaction systems can record that a transaction has happened immediately, and, subject to the guarantees of the system itself, immediately guarantee it won't be reversed.

All on-chain transactions are recorded publicly on the block chain; Bitcoin transactions are not inherently anonymous. It may be possible for a third-party to use the block chain transaction data to determ ine the source and/or destination of a transaction if they can gather enough information linking addresses to identities. Because off-chain transactions do not happen on the block chain they need not be public. Using cryptographic techniques such as tokens it can be made impossible for even the operators of the system itself to determine who participated in a transaction.

Besides, miners usually charge fees to confirm a transaction. While currently the demand for transactions is sufficiently low that fees are relatively small, and transactions can often be confirmed for free, for many applications even paying a few cents per transaction is unaffordable. In addition, Bitcoin currently has a limit of 7 transactions per second, the block size limit. This limit is related to the scalability of the system, and one option to achieve higher transaction volumes is to keep the block size limit as is and use off-chain transactions for lower-value transactions; with higher volumes fees for transactions done on-chain will rise due to supply and demand.

So, an on-chain transaction occurs and is considered valid when the blockchain is modified to reflect the transaction on the public ledger. It involves the transaction being validated and authenticated by a suitable number of participants, recording of the details of the transaction on the suitable block, and broadcasting of the necessary information to the whole blockchain network, which makes it irreversible. This kind transaction can be reversed only after most of the network's hashing power comes to an agreement. Essentially, every step linked to an on-chain transaction occurs on the blockchain, and the blockchain status is modified to reflect the occurrence and validity of the transaction. (For more, see What does a block chain record in a bitcoin exchange transaction).

An off-chain transaction is the movement of value outside of the block chain that can be executed instantly whereas on-chain transactions can have a lengthy lag time depending upon the network load and number of transactions waiting in the queue to be confirmed. Additionally, off-chain transactions offer more security and anonymity to the participants, because details are not publicly broadcast. In case of on-chain transactions, it is possible to partially derive a participant's identity by studying transaction patterns.

While an on-chain transaction modifies the blockchain and depends on the blockchain to determine its validity an off-chain transaction may rely on other methods to record and validate the transaction. Like on-chain transactions all parties must agree to accept the method by which the transaction occurs, the question then being, how can those parties be convinced that the movement of value has happened, will not be reversed, and can be exchanged in the future for something of value?

With an on-chain transaction those questions are answered by the party's faith in the Bitcoin system as a whole. For instance, a transaction (after some number of confirmations) can only be reversed if a majority of hashing power agrees to reverse the transaction. The parties to the transaction are trusting that most of the hashing power in existence is controlled by "honest" parties who will not attempt to reverse the transaction.

If the sender and recipient do not trust each other or would simply prefer someone else record and guarantee the transaction, they can use a trusted third party to record and guarantee the transaction. Most of the conventional banking and electronic payment systems work this way.

So it is an object of the invention to provide a method based on a trusted third party in a blockchain environment working with smart contracts which contain value and only unlock that value if certain pre-defined conditions are met. When a particular value is reached, i.e. a signature is added, the smart contract changes its state and executes the programmatically predefined algorithms, automatically triggering an event on the blockchain, in the very an event related to the electronic message and any associated event thereof. The primary task of the trusted third party is to provide these values to the smart contract in a secure and trusted manner.

In US 2019/0139037 it is disclosed system, method, method for manufacturing, apparatus, and computer-readable and executable product and program code having an off-chain payment hub. Dynamic payments and signatures can be effected. Multiple smart contract payment hubs are interconnected with efficient transmission routes. Off-chain payment enactment fees can be nullified at no security cost. Registration with a payment hub server comes at no on-chain cost for a user. Collateral costs for trustless operation are marginally reduced to that covering at a fixed time period of operation rather than the whole lifespan of operation. This document relates to how alleviate the burden in payment transactions using off-chain and blockchain solutions.

### Description

The object of the invention is a method for entrusting blockchain transactions contents, wherein at least one transmitting user and at least one configured to interact with a trusted entity connected to a ledger of a blockchain.

The method of the invention comprises the following steps:
- Sending from the transmitting user to the recipient an electronic message related to the transaction through an initial route and a copy of said electronic message to a certification system through a second route.
- Receiving said copy of the electronic message at the certification system,
- Sending from the certification system to the recipient a second electronic message comprising the copy of the electronic message, so the destination message server of the recipient receives the electronic message through the initial route, and the copy of the electronic message through the second route, wherein the second electronic message comprising the copy of the electronic message.

- Receiving in the incoming message server of the certification system data relative to the delivery of the second electronic message,
- Generating at the certification system an electronic document comprising data related to the preceding steps.
- Applying a digital signature to the electronic document of the previous step for the creation of an electronic certificate.

Since the method of the invention implements the access to a blockchain ledger in or to the feed smart contracts with message related data, in at least one of the previous steps, the output resulting from carrying out any one or at least one of said steps is then submitted to the trusted entity to feed a smart contract so the said trusted entity may feed the smart contract with the electronic certificate; then the trusted entity may submit information to a blockchain to be used by smart contracts. By doing so the data resulting from any of the cited steps is loaded as a smart contract that can be invoked when needed to retrieve data from the blockchain and use it, for example, to prove the veracity of any message related data loaded.

This is quite useful for traceability purposes or as an additional trust layer.

### Description of figures

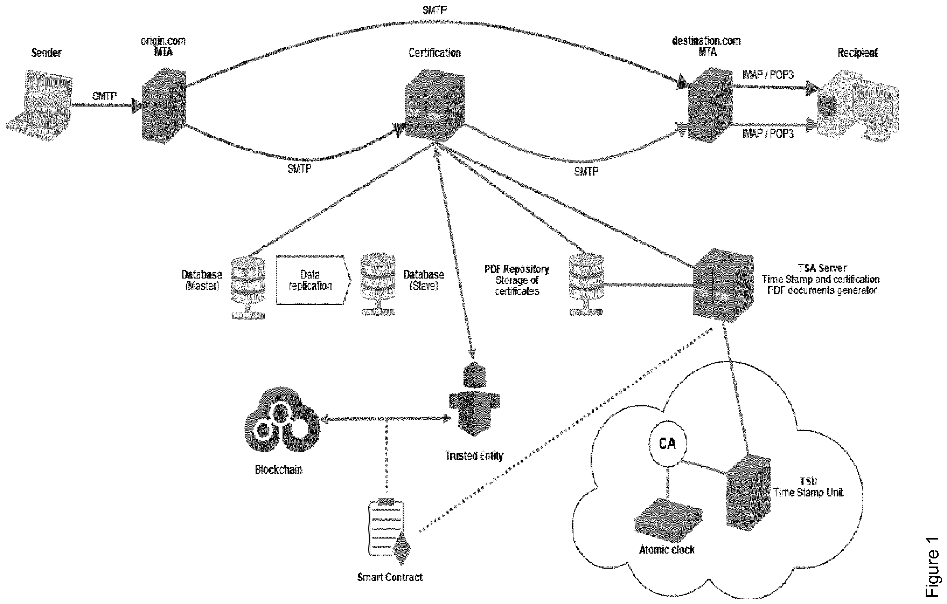

Figure 1 epicts a diagram of the method of the invention where the different entities involved are represented as well as their relationship.

### Detailed description

The object of the invention is based on the use, in a blockchain context, of one trusted third party, also referred as trusted entity throughout this document, which find, verify, and provide real-world data for use in smart contracts; in other words putting data feed into a smart contract.

Since Blockchains cannot access data outside their network. The trusted entity is a data feed - provided by third party service - designed for use in smart contracts on the blockchain.; providing external data and trigger smart contract executions when pre-defined conditions meet. In this case such conditions may be selected from any event related to an electronic message or an associated transaction.

In this preferred embodiment the trusted entity is defined by a telecommunications operator which is a trusted third party per-se and is a part of multi-signature contracts where original trustees sign a contract for triggering events only if certain conditions are met. Before said event is triggered a trusted entity must sign the smart contract as well. For a trusted entity to work in a blockchain network, a few necessary conditions must be met:
- Multiple endorsers must be able to obtain, from a trusted third party that answers questions in a deterministic fashion without knowing the full context of the transaction, the same answer to preserve the deterministic aspect of a smart contract.
- A durable link must be established between the execution of a smart contract and the response from the trusted entity.
- The confidentiality of the data must be preserved where required.

In a preferred embodiment of the invention a transmitting user, namely a sender, sends an electronic message to a recipient in figure 1, thus initiating a request with a channel being set up and running. At last one of the users has registered and enrolled with an organization's certificate authority (CA) and received back necessary cryptographic material, which is used to authenticate to the network.

A chain code containing a set of key value pairs representing an initial state of a transaction concerning the electronic message or any of the events and contents related therein is installed on the peers and instantiated on the channel. The chain code contains logic defining a set of transaction instructions and the agreed upon a certain status of the message or event related to its content or attachments thereby, namely a certain status of the electronic message: sent, received, read, acknowledged, opened, downloaded, signed or any status relevant to electronic messages, their contents or attachments. An endorsement policy has also been set for this chain code, stating that both peer A and peer B must endorse any transaction. The endorsement policy states that both peer A and peer B must endorse any transaction, therefore the request goes to peer A, which represents the transmitting user and peer B which represents the recipient.

Next, a transaction proposal with a request to invoke a chain code function so that data can be read and/or written to the ledger is generated, using the cryptographic credentials of the user (preferably the transmitting user requesting the transaction) to produce a unique signature for this transaction proposal.

The application verifies the endorsing peer signatures and compares the proposal responses to determine if the proposal responses are the same. If the chain code only queried the ledger, the application would inspect the query response and would typically not submit the transaction to Ordering Service. If the client application intends to submit the transaction to Ordering Service to update the ledger, the application determines if the specified endorsement policy has been fulfilled before submitting (i.e. did peer A and peer B both endorse). The architecture is such that even if an application chooses not to inspect responses or otherwise forwards an unendorsed transaction, the endorsement policy will still be enforced by peers and upheld at the comm it validation phase. The application "broadcasts" the transaction proposal and response within a "transaction message" to the Ordering Service. The transaction will contain the read/write sets, the endorsing peers signatures and the Channel ID. The Ordering Service does not need to inspect the entire content of a transaction in order to perform its operation, it simply receives transactions from all channels in the network, orders them chronologically by channel, and creates blocks of transactions per channel.

The blocks of transactions are "delivered" to all peers on the channel. The transactions within the block are validated to ensure endorsement policy is fulfilled and to ensure that there have been no changes to ledger state for read set variables since the read set was generated by the transaction execution. Transactions in the block are tagged as being valid or invalid. Each peer appends the block to the channel's chain, and for each valid transaction the write sets are committed to current state database. An event is emitted, to notify the client application that the transaction (invocation) has been immutably appended to the chain, as well as notification of whether the transaction was validated or invalidated.

In Figure 1 it is depicted how a trusted entity component works with a blockchain network using smart contracts, as it is shown, a client application submits the transaction to each organization that needs to endorse the transaction (as specified in the endorsement policy). The client application being unaware that the smart contract will delegate a portion of the execution to an external system.

Then each of any one of the endorsing peer in each organization issues, preferably in parallel, a request to the trusted third party with enough information so that the trusted entity can correlate the various requests from the different endorsing peers; preferably using a hierarchical data structure implementing an abstract data type (ADT). In a preferred embodiment of the invention this may be accomplished by implementing a hash tree that includes all inputs sent to the smart contract, though it exposes only those fields that must be shared with the trusted entity. Using a hash tree, like a Merkle tree, allows for traceability between the input parameters and the trusted third party's response.

The trusted third party may then correlate the various requests from the different endorsing peers using the binding field to correlate common requests and ensure consistency in the response. The response should also be signed by the trusted third party to avoid any potential tampering. Also, an Apache Kafka topic could be used to ensure ordering of those requests. The trusted third party uses the binding field to correlate common requests. The trusted third party's response structure may include a link between the request hash and the response and a signature from the trusted third party. The endorser peers validate the signature of the trusted third party. The signature and the response data should all be preserved on the ledger to provide auditability.

In the light of the above, the sender may send a message to the recipient an electronic message related to the transaction through an initial route and a copy of said electronic message to a certification system through a second route; said copy being received said copy of the electronic message at the certification system.

Then, the certification system sends to the recipient a second electronic message comprising the copy of the electronic message, so the destination message server of the recipient receives:
∘ the electronic message through the initial route, and
∘ the copy of the electronic message through the second route, wherein the second electronic message comprising the copy of the electronic message.

Once the incoming message server of the certification system receives data relative to the delivery of the second electronic message, an electronic document comprising data related to the procedure described above is generated at the certification system, and digital signature is applied to the electronic document for the creation of an electronic certificate,

In at least one of the previous steps, namely sending, accepting, receiving, denying, rebounding or any event related to the transmission of data related to the transaction the method hereby described comprises submitting the result of the step related to any of the events related to the transmission of data related to the transaction to the trusted entity to feed a smart contract wherein said trusted entity feed the smart contract with the electronic certificate; said trusted entity submitting information to a blockchain to be used by smart contracts.

In this way the generated electronic certificate embraces an additional layer of data related to traceability of the data incorporated thereof; hence any of the data embraced by the certificate, or all of it, may have been loaded in the smart contract and added to the ledger; hence the electronic certificate is enhanced by comprising data endorsed by a blockchain environment.

A particular indication in the copy of the electronic message may be inserted before delivering said copy of the electronic message to the recipient; an indication such a string of text.

Since the method for entrusting blockchain transactions contents of the invention embraces the use of blockchain technology preserving the signature and the response data the ledger to provide auditability is also provided as an optional feature of required.

In alternate embodiment of the invention and in order to reliably enable blockchain features, any one of all of the endorsing peers may verify that the transaction proposal is well formed, that the transaction proposal has not been submitted already in the past, and that the signature is valid; then it is verified that the transmitting user is properly authorized to perform the proposed operation on that channel (namely, each endorsing peer ensures that the submitter satisfies the channel's Writers policy). Then the endorsing peers may take the transaction proposal inputs as arguments to the invoked chain code function and a chaincode is executed against the current state database to produce transaction results including a response value, read set, and write set.

In any of the aforementioned embodiments the signature might be validated by means of a peer component that allows them to verify transaction requests arriving from clients and to sign transaction results.

## Claims

1. Method for entrusting blockchain transactions contents, wherein at least one transmitting user configured to interact with a trusted entity connected to a ledger of a blockchain, the method comprising:
• sending from the transmitting user to a recipient user:
∘ an electronic message related to a a transaction concerning an electronic message or any of the events and contents related therein through an initial route,
∘ a copy of said electronic message to a certification system through a second route,
• receiving said copy of the electronic message at the certification system,
• sending from the certification system to the destination message server of the recipient a second electronic message comprising the copy of the electronic message, so the destination message server of the recipient receives:
∘ the electronic message through the initial route, and
∘ the copy of the electronic message through the second route, wherein the second electronic message comprising the copy of the electronic message,
• receiving in the incoming message server of the certification system data relative to the delivery of the second electronic message sent to the destination message server of the recipient,
• generating at the certification system an electronic document comprising data related to at least one of :
∘ the electronic message,
∘ the copy of said electronic message to the destination message server of the recipient ,
∘ data relative to the delivery of the second electronic message to the destination message server of the recipient and
• applying a digital signature to the electronic document of the previous step for the creation of an electronic certificate,
the **method being characterised by** comprising, in at least one of the previous steps, further submitting the result of the signed electronic document to the trusted entity to feed a smart contract wherein said trusted entity feed the smart contract with the electronic certificate; said trusted entity submitting information to a blockchain to be used by smart contracts.

2. The method for entrusting blockchain transactions contents of any one of the preceding claims further comprising inserting a particular indication indicating it is a copy message in the copy of the electronic message before delivering said copy of the electronic message to the recipient.

3. The method for entrusting blockchain transactions contents of any one of the preceding claims further comprising preserving the signature and the response data the ledger to provide auditability.

4. The method for entrusting blockchain transactions contents of any one of the preceding claims further comprising the endorsing peers:
• verifying that:
∘ the transaction proposal is well formed,
∘ the transaction proposal has not been submitted already in the past,
∘ the signature is valid, and
∘ the transmitting user is properly authorized to perform the proposed operation on an specific channel, and
• taking transaction proposal inputs as arguments to the invoked chain code function,
wherein the method further comprises executing a chaincode against the current state database to produce transaction results including a response value, read set, and write set.

5. The method for entrusting blockchain transactions contents of any one of the preceding claims wherein the signature is validated by means of a peer component that allows to verify transaction requests arriving from clients and to sign transaction results.

## Patentansprüche

1. Verfahren zum Anvertrauen von Blockchain-Transaktionsinhalten, wobei mindestens ein übertragender Benutzer so konfiguriert ist, dass er mit einer vertrauenswürdigen Entität interagiert, die mit einem Ledger einer Blockchain verbunden ist, wobei das Verfahren Folgendes umfasst:
• Senden vom sendenden Benutzer an einen Empfänger:
∘ eine elektronische Nachricht in Bezug auf die Transaktion über einen anfänglichen Weg,
∘ eine Kopie dieser elektronischen Nachricht an ein Zertifizierungssystem über einen zweiten Weg,
• Erhalt der Kopie der elektronischen Nachricht beim Zertifizierungssystem,
• Senden einer zweiten elektronischen Nachricht, die die Kopie der elektronischen Nachricht umfasst, vom Zertifizierungssystem an den Empfänger, sodass der Zielnachrichtenserver des Empfängers Folgendes erhält:
∘ die elektronische Nachricht durch den Anfangsweg und
∘ die Kopie der elektronischen Nachricht über den zweiten Weg, wobei die zweite elektronische Nachricht die Kopie der elektronischen Nachricht umfasst,
• Empfangen von Daten bezüglich der Zustellung der zweiten elektronischen Nachricht im Posteingangsserver des Zertifizierungssystems,
• Generieren eines elektronischen Dokuments im Zertifizierungssystem, das Daten enthält, die sich auf die vorhergehenden Schritte beziehen, und
• Aufbringen einer digitalen Signatur auf das elektronische Dokument des vorherigen Schritts zur Erstellung eines elektronischen Zertifikats,
wobei das Verfahren **dadurch gekennzeichnet ist, dass** es in mindestens einem der vorangegangenen Schritte das weitere Senden des Ergebnisses des Schrittes an die vertrauenswürdige Entität umfasst, um einen Smart Contract zu füttern, wobei die vertrauenswürdige Entität den Smart Contract mit dem elektronischen Zertifikat speist; wobei die vertrauenswürdige Entität Informationen an eine Blockchain übermittelt, die von Smart Contracts verwendet werden sollen.

2. Verfahren zum Anvertrauen von Blockchain-Transaktionsinhalten nach einem der vorhergehenden Ansprüche, ferner umfassend das Einfügen eines bestimmten Hinweises in die Kopie der elektronischen Nachricht, bevor die Kopie der elektronischen Nachricht an den Empfänger geliefert wird.

3. Verfahren zum Anvertrauen von Blockchain-Transaktionsinhalten nach einem der vorangehenden Ansprüche, ferner umfassend das Aufbewahren der Signatur und der Antwortdaten im Hauptbuch, um Prüfbarkeit bereitzustellen.

4. Verfahren zum Anvertrauen von Blockchain-Transaktionsinhalten nach einem der vorangehenden Ansprüche, ferner umfassend die indossierenden Peers:
• Überprüfung, dass:
∘ das Transaktionsangebot wohlgeformt ist,
∘ der Transaktionsvorschlag noch nicht in der Vergangenheit eingereicht wurde,
∘ die Signatur gültig ist, und
∘ der sendende Benutzer ordnungsgemäß autorisiert ist, die vorgeschlagene Operation auf einem bestimmten Kanal durchzuführen, und
• Transaktionsvorschlagseingaben als Argumente für die aufgerufene Chain-Code-Funktion nehmen,
wobei das Verfahren ferner das Ausführen eines Kettencodes gegen die aktuelle Zustandsdatenbank umfasst, um Transaktionsergebnisse zu erzeugen, die einen Antwortwert, einen Lesesatz und einen Schreibsatz enthalten.

5. Verfahren zum Anvertrauen von Blockchain-Transaktionsinhalten nach einem der vorhergehenden Ansprüche, wobei die Signatur mittels einer Peer-Komponente validiert wird, die es ermöglicht, von Clients eingehende Transaktionsanfragen zu verifizieren und Transaktionsergebnisse zu signieren.

## Revendications

1. Procédé pour confier des contenus de transactions blockchain, dans lequel au moins un utilisateur émetteur est configuré pour interagir avec une entité de confiance connectée à un registre d'une blockchain, le procédé comprenant :
• envoi de l'utilisateur émetteur vers un destinataire :
∘ un message électronique lié à la transaction par un premier parcours,
∘ une copie dudit message électronique à un système de certification par une seconde voie,
• recevoir ladite copie du message électronique au niveau du système de certification,
• envoi du système de certification au destinataire d'un deuxième message électronique comprenant la copie du message électronique, afin que le serveur de messagerie destinataire du destinataire reçoive :
∘ le message électronique par la voie initiale, et
∘ la copie du message électronique par la seconde voie, le second message électronique comprenant la copie du message électronique,
• recevoir dans le serveur de messages entrants du système de certification des données relatives à la délivrance du deuxième message électronique,
• générer au niveau du système de certification un document électronique comprenant les données relatives aux étapes précédentes, et
• apposer une signature numérique sur le document électronique de l'étape précédente pour la création d'un certificat électronique,
le procédé étant **caractérisé en ce qu'**il comprend, dans au moins une des étapes précédentes, la soumission supplémentaire du résultat de l'étape à l'entité de confiance pour alimenter un contrat intelligent dans lequel ladite entité de confiance alimente le contrat intelligent avec le certificat électronique ; ladite entité de confiance soumettant des informations à une blockchain à utiliser par des contrats intelligents.

2. Procédé pour confier le contenu de transactions blockchain selon l'une quelconque des revendications précédentes comprenant en outre l'insertion d'une indication particulière dans la copie du message électronique avant de délivrer ladite copie du message électronique au destinataire.

3. Procédé pour confier le contenu des transactions de la chaîne de blocs selon l'une quelconque des revendications précédentes, comprenant en outre la conservation de la signature et des données de réponse du grand livre pour fournir une vérifiabilité.

4. Procédé pour confier le contenu des transactions blockchain de l'une quelconque des revendications précédentes comprenant en outre les pairs endossants :
• vérifier que :
∘ la proposition de transaction est bien formée,
∘ la proposition de transaction n'a pas déjà été soumise dans le passé,
∘ la signature est valide, et
∘ l'utilisateur émetteur est dûment autorisé à effectuer l'opération proposée sur un canal spécifique, et
• prendre les entrées de proposition de transaction comme arguments de la fonction de code de chaîne invoquée,
dans lequel le procédé comprend en outre l'exécution d'un code de chaîne par rapport à la base de données d'état actuel pour produire des résultats de transaction comprenant une valeur de réponse, un ensemble de lecture et un ensemble d'écriture.

5. Procédé pour confier le contenu de transactions blockchain selon l'une quelconque des revendications précédentes dans lequel la signature est validée au moyen d'un composant pair qui permet de vérifier les requêtes de transaction arrivant des clients et de signer les résultats de transaction.
